# EUROPÄISCHE PATENTSCHRIFT

(11) **EP 0 482 538 B1**
(45) Veröffentlichungstag und Bekanntmachung des Hinweises auf die Patenterteilung: **22.02.1995**
(21) Anmeldenummer: 91117874.7
(22) Anmeldetag: 19.10.1991
(51) Int. Cl.: B29C 47/88, F24F 5/00, F25B 29/00

(54) **Kühlgerät für einen Blasextruder**
Cooling apparatus for a blow extruder
Dispostif de refroidissement d'une extrudeuse pour le soufflage

(30) Priorität: 20.10.1990 DE 4033461
(43) Veröffentlichungstag der Anmeldung: 29.04.1992
(73) Patentinhaber: Sulzer Escher Wyss GmbH, D-88131 Lindau (DE); Paul Kiefel GmbH, D-67547 Worms (DE)
(72) Erfinder: Gottwald, Günter, W-8500 Nürnberg (DE); Schaeffer, Gerard, W-6520 Worms (DE)
(74) Vertreter: Böhme, Volker, Dipl.-Ing.

(56) Entgegenhaltungen:
- EP-A- 0 149 002
- EP-A- 0 340 335
- DE-A- 2 737 037
- FR-A- 1 434 501
- US-A- 4 115 047

## Beschreibung

Die Erfindung betrifft ein Kühlgerät für Kühlluft eines Blasextruder für einen Kunststoffschlauch, bei dem ein ringförmiges Düsenaggregat für den Kunststoffschlauch an eine Kunststoffzufuhreinrichtung angeschlossen ist und koaxial zu einer Innenlufteinrichtung angeordnet ist und bei dem dem Düsenaggregat koaxial und den Schlauch umschließend ein Kühlluft-Düsenring zugeordnet ist, zu dem ein Gebläse Umgebungsluft fördert, wobei das Kühlgerät im Förderweg des Gebläses vorgesehen und im Hinblick auf die Temperatur der Kühlluft mit einer Regeleinrichtung zum selbsttätigen Regeln auf eine eingestellte konstante Temperatur im Vergleich mit einer gemessenen Temperatur versehen ist.

Bei einem Blasextruder für einen Kunststoffschlauch fördert eine Kunststoffzufuhreinrichtung verflüssigten Kunststoff zu einem ringförmigen Düsenaggregat, das aus einer inneren, ringförmig in sich geschlossenen Schlitzdüse den Kunststoffschlauch abgibt, der bei waagerechter Anordnung des Düsenaggregates vertikal abgeführt wird. Auf der dem Schlauch abgewendeten Seite des Düsenaggregates ist eine Innen- bzw. Stützlufteinrichtung vorgesehen, die Luft in den Schlauch drückt, um diesen am Zusammenfallen zu hindern bzw. aufgeweitet zu halten. Mit Abstand von dem Düsenaggregat ist ein Walzenpaar vorgesehen, das den Schlauch an dem vom Düsenaggregat fernen Ende geschlossen hält und wegfördert. Das Düsenaggregat ist an der der Innenlufteinrichtung abgewendeten Seite mit einem Kühlluft-Blasring versehen, aus dem Kühlluft auf den aus der Schlitzdüse nahezu flüssig austretendem Schlauch trifft, um das Schlauchmaterial beschleunigt zu kühlen und erstarren zu lassen. Die Umgebungsluft ist zum Beispiel Raumluft einer Fabrikhalle oder Außenluft von außerhalb der Fabrikhalle und weist eine schwankende und häufig zu hohe Temperatur auf. Wenn diese Umgebungsluft zum Kühlen auf den aushärtenden Schlauch geblasen wird, so weist der fertige Schlauch über die Länge schwankende und ungünstige Eigenschaften auf.

Im Hinblick auf eine unkonditionierte Umgebungsluft mit einer für das Schlauchkühlen nur schlecht geeigneten hohen und schwankenden Temperatur kann daran gedacht werden, ein Kühlgerät mit eigenem Ventilator vorzusehen, das die Umgebungsluft selbst ansaugt und kühlt. Das Gebläse saugt die gekühlte Umgebungsluft an. Bei einem solchen Vorschlag läßt sich das Kühlgerät als Wasserkühlgerät ausbilden. Ein Kühlgerät mit Wasserkühlung läßt sich nur recht ungenau im Hinblick auf eine bestimmte Temperatur der Kühlluft steuern und läßt nur minimale Temperaturen der Kühlluft von zum Beispiel 15°C zu. Da die gekühlte Luft durch das Gebläse läuft, das Wärme abgibt, muß die Luft so tief gekühlt werden, daß sie nachfolgend noch die vom Gebläse abgegebene Wärme aufnehmen kann. Bei dem Vorschlag läßt sich die Regelung in Abhängigkeit von der Temperatur der dem Gebläse zuströmenden Luft vornehmen.

Ein bekannter (EP-A-0 340 335) Blasextruder der eingangs genannten Art weist als Kühlgerät im Kühlluftstrom meanderförmig hin- und herverlaufende Kühlmittelleitungen auf, wobei mit dem Wärmetauscher eine Klimatisierung der Kühlluft möglich ist. Ein Kühlgerät mit Wasserkühlung läßt sich nur recht ungenau im Hinblick auf eine bestimmte Temperatur der Kühlluft des Blasextruders steuern und läßt nur minimale Temperaturen der Kühlluft von z. B. 15 Grad Celsius zu. Die über die Länge schwankenden und ungünstigen Eigenschaften des fertigen Kunststoffschlauches lassen sich also mit dem bekannten Blasextruder bzw. dessen Kühlgerät nur unzureichend beheben, da die Temperatur weder ausreichend konstant noch ausreichend tief eingestellt werden kann.

Es ist auch bekannt (US-A-4 115 047), einen von einem Blasextruder abgegebenen Kunststoffschlauch durch zwei Kühlkammern zu führen, die über ein Gebläse miteinander verbunden sind und denen über je eine Zufuhrleitung von einem Tank ein Kühlgas zugeführt wird. In jeder Kühlkammer wird die Temperatur gemessen und mit jeder Temperaturmessung wird ein Ventil in der zugehörigen Zufuhrleitung gesteuert. Diese Vorrichtung arbeitet nicht mit einer durch ein Gebläse bewegten Kühlluft und nicht mit einem Kühlluft-Düsenring.

Eine Aufgabe der Erfindung ist es daher, ein Kühlgerät der eingangs genannten Art zu schaffen, das konstante Konditionen der Kühlluft in verbesserter Weise gewährleistet und tiefere Temperaturen der Kühlluft auf einfache Weise zuläßt. Das erfindungsgemäße Kühlgerät ist, diese Aufgabe lösend, dadurch gekennzeichnet, daß es zwischen dem Gebläse und dem Kühlluft-Düsenring, bei diesem, angeordnet ist, daß es ein mit einer Kälteanlage versehener Direktverdampfer ist, der ein mit Rippen versehenes Lamellenteil und eine Einspritzeinrichtung für Kältemittel und Heißgas aufweist, und daß der Regeleinrichtung des Direktverdampfers eine beim Eintritt in den Kühlluft-Düsenring gemessene Temperatur zugeordnet ist.

Durch den Einsatz des an sich bekannten Direktverdampfers läßt sich die Kühlluft auf Temperaturen unterhalb 15°C, bis hinab auf 3°C kühlen. Durch die Verwendung des Direktverdampfers ist eine schnellere genauere Regelung auf eine konstante Temperatur gegeben. Da es möglich ist, im Direktverdampfer Heißgas zuzugeben, läßt sich auch eine Umgebungstemvon weniger als 3°C verarbeiten, d.h. das Kühlgerät ist ein Temperaturkonditioniergerät. Die aus dem Kühlgerät austretende Luft wird nicht mehr durch die vom Gebläse abgegebene Wärme aufgeheizt. Die Regelung der Temperatur erfolgt im Hinblick auf die beim Eintritt in den Kühlluft-Düsenring gemessene Temperatur, die im wesentlichen der Temperatur der Kühlluft gleich ist. Durch diese Maßnahme wird die Qualität des hergestellten Kunststoffschlauches ganz erheblich verbessert und hoch bzw. konstant gehalten. Zum Beispiel läßt sich ein Schlauch herstellen, dessen Dicke über die Länge hin hochkonstant ist. Im Hinblick auf die hochkonstante Einblastemperatur von zum Beispiel 15 - 18°C, kann der heiße extrudierte Kunststoff konstanter und schneller gefahren bzw. abgeführt werden. Es zeigt sich, daß der Einfluß der Kühlluft auf die Funktion und die Leistung des Blasextruders von erheblicher Bedeutung ist. Es ergeben sich Leistungssteigerungen von ca. 10%.

Besonders zweckmäßig und vorteilhaft ist es, wenn das Kühlgerät am Einlaßstutzen mit einem Filter für Luftverunreinigungen versehen ist. Dieser Filter schützt den Direktverdampfer gegen Ablagerungen und gewährleistet über lange Zeit konstante Arbeitsweise des Direktverdampfers.

Unter Umständen ist es nötig, den Direktverdampfer mit einem zusätzlichen Hilfsventilator zu versehen, wenn das Gebläse nicht ausreichend stark ist. Besonders zweckmäßig und vorteilhaft ist es jedoch, wenn der Direktverdampfer frei von einem Ventilator oder einem Zusatzgebläse ist. Diese vereinfacht den Aufbau des Direktverdampfers und vermeidet auch die von einem Hilfsventilator abgegebene Abwärme.

In der Zeichnung ist eine bevorzugte Ausführungsform der Erfindung dargestellt und zeigt
- Fig. 1: schematisch eine Seitenansicht eines Blasextruders,
- Fig. 2: schematisch eine Seitenansicht eines Kühlgerätes für den Blasextruder gemäß Fig. 1 und
- Fig. 3: ein Schaltschema des Kühlgerätes gemäß Fig. 2.

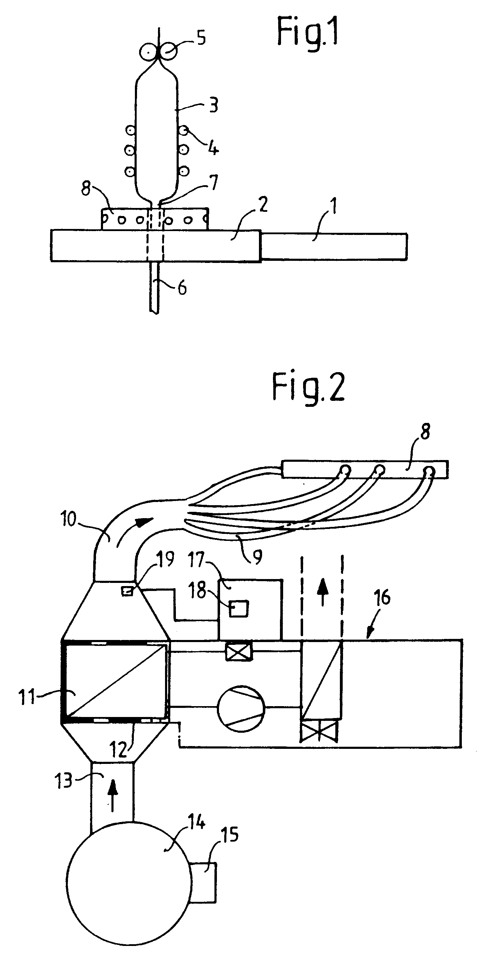

Der Blasextruder gemäß Fig. 1 weist eine Kunststoffzufuhreinrichtung 1 auf, die Kunststoff in Granulatform schmilzt und durchmischt und den flüssigen Kunststoff einem ringförmigen Düsenaggregat 2 zuführt. Das Düsenaggregat 2 sondert im Inneren des Ringes einen im Querschnitt ringförmigen Film 7 von Kunststoff aus, der als Kunststoffschlauch 3 vertikal nach oben wandert. Der Kunststoffschlauch 3 ist seitlich von Stützrollen 4 geführt und wird oben von einem Walzenpaar 5 zusammengelegt und weiter gefördert. Von unten wird mittels einer Innenlufteinrichtung 6 Luft in den Schlauch 3 gedrückt, um diesen zu weiten und offen zu halten. Der Bereich des eben abgesonderten ringförmigen Filmes 7 ist von einem Kühlluft-Düsenring 8 umgeben, der Kühlluft gegen den ringförmigen Film bläst.

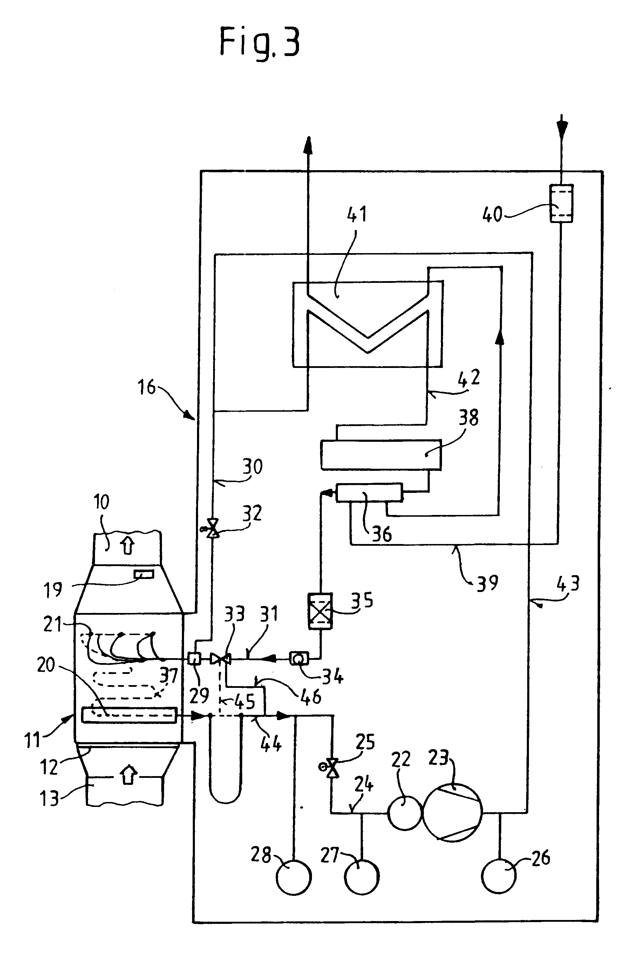

Gemäß Fig. 2 sind an den Kühlluft-Düsenring 8 ringsum verteilt Schlauchleitungen 9 angeschlossen, die sich bei einem Auslaßrohr 10 verzweigen, das am Ausgang eines Direktverdampfers 11 sitzt. Am Eingang des Direktverdampfers 11 ist ein Filter 12 vorgesehen und ein Zwischenrohr 13 angeschlossen, auf das ein Gebläse 14 arbeitet, das über einen Stutzen 15 unkonditionierte Umgebungsluft ansaugt. Der Direktverdampfer 11 ist mit einer Kälteanlage 16 versehen, die im einzelnen in Fig. 3 gezeigt ist. Der Direktverdampfer 11 bzw. dessen Kälteanlage 16 ist mit einer Regeleinrichtung 17 versehen, die auf die Kälteanlage bzw. den Direktverdampfer arbeitet und die eine Stelleinrichtung 18, mit der sich eine bestimmte gewünschte Temperatur am Ausgang des Direktverdampfers 11 als Sollwert einstellen läßt, und einen Sollwert/Istwertvergleich aufweist. Ein am Ausgang des Direktverdampfers vorgesehener Temperaturfühler 19 gibt die tatsächlich vorhandene Temperatur (Istwert) an die Regeleinrichtung 17.

Gemäß Fig. 3 umfaßt der Direktverdampfer 11 einen mit Rippen versehenen Lamellenteil 20 und eine in eine Kühlmittel-Durchlaufwendel 37 arbeitende Einspritzeinrichtung 21, die beide mit der Kälteanlage 16 in Verbindung stehen. Die zu konditionierende Luft durchströmt den Direktverdampfer 11 und tauscht Wärme mit den Lamellen und dem durch die Durchlaufwendel 37 strömenden Kühlmittelgas aus. An der Auslaßseite des Direktverdampfers 11 arbeitet über eine Rohrleitung 24 ein von einem Motor 22 betriebener Verdichter 23. In der Rohrleitung 24 liegt ein mittels eines Motors betätigbares Drosselventil 25; an die Rohrleitung 24 sind angeschlossen ein hochdruckseitiger Druckbegrenzer 26 und auf der Niederdruckseite ein bei zu hohen Druck wirksamer Druckhalter 27 und ein bei zu niedrigem Druck wirksamer Druckhalter 28. Die Zufuhr zu der Einspritzeinrichtung 21 wird von einem Heißgasmischer 29 geregelt, an den einserseits eine Rohrleitung 30 für heißes Kühlmittelgas und andererseits eine Rohrleitung 31 für kalte Kühlmittelflüssigkeit angeschlossen ist. Die Rohrleitung 30 für heißes Kühlmittelgas führtüber ein steuerbares Magnetventil 32 zu einer Verbindungsleitung 43, wobei sich mittels des Magnetventiles 32 die Durchflußmenge an Kühlmittelgas steuern läßt. In der Rohrleitung 31 für Kühlmittelflüssigkeit liegt ein thermisches Expansionsventil 33, mit dem sich die Durchflußmenge an Kühlmittelflüssigkeit steuern läßt. Die Rohrleitung 31 für kalte Kühlmittelflüssigkeit kommt über ein Schauglas 34 und einen Trockner 35 von einem Unterkühler 36. Der Unterkühler 36 wird von einem Sammler 38 gespeist. An den Unterkühler 36 ist ein Kühlwasserkreislauf 39 angeschlossen, der einen Schmutzfänger 40 umfaßt und durch einen Verflüssiger 41 verläuft, durch den auch eine Verbindungsleitung 42 zwischen dem Sammler 38 und der Verbindungsleitung 43 für Kühlmittel verläuft.

In den Kühlwasserkreislauf strömt Wasser von 12 - 20°C hinein und Wasser von 18 - 26°C hinaus. In der Rohrleitung 24 ist ein Thermoelement 44 vorgesehen, das über eine elektrische Steuerleitung 45 auf das Ventil 33 wirkt. Weiterhin ist eine Ausgleichsrohrleitung 46 zwischen der Rohrleitung 31 und der Rohrleitung 24 vorgesehen. Die Regeleinrichtung 17 arbeitet über nichtgezeigte elektrische Steuerleitungen auf die drei Ventile 32, 33, und 25, um den Istwert laufend an den Sollwert heranzuführen. Um die Regelung noch feinfühliger zu machen, wird zusätzlich der Heißgasmischer 29 bei verstellbarer Ausbildung über eine elektrische Steuerleitung an die Regeleinrichtung 17 angeschlossen.

## Patentansprüche

1. Kühlgerät (11) für Kühlluft eines Blazextruders für einen Kunststoffschlauch (3).
bei dem ein ringförmiges Düsenaggregat (2) für den Kunststoffschlauch (3) an eine Kunststoffzufuhreinrichtung (1) angeschlossen ist und koaxial zu einer Innenlufteinrichtung (6) angeordnet ist und
bei dem dem Düsenaggregat (2) koaxial und den Schlauch (3) umschließend ein Kühlluft-Düsenring (8) zugeordnet ist, zu dem ein Gebläse (14) Umgebungsluft fördert,
wobei das Kühlgerät (11) im Förderweg des Gebläses (14) vorgesehen und im Hinblick auf die Temperatur der Kühlluft mit einer Regeleinrichtung (17) zum selbsttätigen Regeln auf eine eingestellte konstante Temperatur im Vergleich mit einer gemessenen Temperatur versehen ist,
**dadurch gekennzeichnet,**
daß das Kühlgerät (11) zwischen dem Gebläse (14) und dem Kühlluft-Düsenring (8), bei diesem angeordnet ist, daß es ein mit einer Kälteanlage (16) versehener Direktverdampfer (11) ist, der ein mit Rippen versehenes Lamellenteil (20) und eine Einspritzeinrichtung (21) für Kältemittel und Heißgas aufweist, und
daß der Regeleinrichtung (17) des Direktverdampfers (11) eine beim Eintritt in den Kühlluft-Düsenring (8) gemessene (19) Temperatur zugeordnet ist.

2. Kühlgerät nach Anspruch 1, **dadurch gekennzeichnet,** daß es am Einlaßstutzen mit einem Filter (12) für Luftverunreinigungen versehen ist.

3. Kühlgerät nach Anspruch 1 oder 2, **dadurch gekennzeichnet,** daß der Direktverdampfer (11) ventilatorfrei ist.

4. Kühlgerät nach Anspruch 1, 2 oder 3, **dadurch gekennzeichnet,** daß ein Sollwert/Istwert-Vergleich der Regeleinrichtung auf ein Ventil (33) am Eingang des Direktverdampfers (11), auf ein Ventil (25) zwischen dem Direktverdampfer (11) und einem Verdichter (23) und ein Ventil (32) in einer Beimischleitung (30) für heißes Kältemittel arbeitet.

## Claims

1. Cooling device (11) for cooling air of a blow extruder for a plastic tube (3), in which an annular nozzle assembly (2) for the plastic tube (3) is connected to a plastic feeder (1) and arranged coaxially with an internal air device (6) and in which associated with the nozzle assembly (2) coaxially and surrounding the tube (3) is a cooling air nozzle ring (8) to which a blower (14) conveys ambient air, wherein the cooling device (11) is provided in the conveying path of the blower (14) and, with respect to the temperature of the cooling air, provided with a regulating device (17) for automatic regulation to a set constant temperature in comparison with a measured temperature, characterised in that the cooling device (11) is arranged between the blower (14) and the cooling air nozzle ring (8), by the latter, in that it is a direct evaporator (11) which is provided with a refrigerating system (16) and which comprises a finned lamellar portion (20) and an injector (21) for refrigerant and hot gas, and in that a temperature measured (19) on entry into the cooling air nozzle ring (8) is assigned to the regulating device (17) of the direct evaporator (11).

2. Cooling device according to claim 1, characterised in that at the inlet connection it is provided with a filter (12) for air contaminants.

3. Cooling device according to claim 1 or 2, characterised in that the direct evaporator (11) has no fan.

4. Cooling device according to claim 1, 2 or 3, characterised in that comparison of nominal and actual values by the regulating device operates on a valve (33) at the input of the direct evaporator (11), on a valve (25) between the direct evaporator (11) and a compressor (23), and a valve (32) in an adding pipe (30) for hot refrigerant.

## Revendications

1. Appareil de réfrigération (11) pour l'air de refroidissement d'une extrudeuse par soufflage d'un tuyau (3) en matière plastique, dans lequel un groupe (2) de buses annulaire pour le tuyau (3) en matière plastique est raccordé à un dispositif d'amenée (1) de matière plastique et agencé coaxialement par rapport à un dispositif d'air intérieur (6) et dans lequel une couronne (8) de buses d'air de refroidissement est associée de manière coaxiale par rapport au groupe (2) de buses et entourant le tuyau (3), une soufflerie (14) amenant de l'air ambiant vers ladite couronne, l'appareil de réfrigération (11) étant prévu sur le parcours de la soufflerie (14) et, en ce qui concerne la température de l'air de refroidissement, l'appareil de réfrigération étant pourvu d'un dispositif de régulation (17) automatique à une température constante réglée, en comparaison avec une température mesurée, caractérisé en ce que l'appareil de réfrigération (11) est agencé entre la soufflerie (14) et la couronne (8) de buses d'air de refroidissement, au voisinage de celle-ci, en ce qu'il s'agit d'un évaporateur direct (11) équipé d'une installation frigorifique (16), en ce qu'il présente un élément à lamelles (20) pourvu de nervures et un système d'injection (21) pour un agent réfrigérant et pour un gaz chauffant, et en ce qu'au dispositif de régulation (17) de l'évaporateur direct (11) est associée une température mesurée (19) à l'entrée dans la couronne (8) de buses d'air de refroidissement.

2. Appareil de réfrigération selon la revendication 1, caractérisé en ce qu'à son raccord d'admission, il est équipé d'un filtre (12) pour les poussières atmosphériques.

3. Appareil de réfrigération selon l'une ou l'autre des revendications 1 et 2, caractérisé en ce que l'évaporateur direct (11) est exempt de ventilateur.

4. Appareil de réfrigération selon l'une quelconque des revendications 1, 2 ou 3, caractérisé en ce qu'une comparaison valeur de consigne/valeur effective du dispositif de régulation agit sur une soupape (33) à l'entrée de l'évaporateur direct (11), sur une soupape (25) entre l'évaporateur direct (11) et un compresseur (23), et sur une soupape (32) dans une conduite de mélange (30) pour agent réfrigérant chaud.
